# DEMANDE DE BREVET EUROPEEN

(11) **EP 2 808 569 A1**
(43) Date de publication de la demande: **03.12.2014**
(21) Numéro de dépôt: 14170091.4
(22) Date de dépôt: 27.05.2014
(51) Int. Cl.: F16C 33/46

(54) **Réalisation d'excroissances de retenue des corps roulants d'une cage de roulement.**

(30) Priorité: 31.05.2013 FR 1355021
(71) Demandeur: NTN-SNR Roulements, 74000 Annecy (FR)
(72) Inventeur: Ehinger, Pierre, 74210 FAVERGES (FR); Grangier, Julien, 74150 RUMILLY (FR)
(74) Mandataire: Derambure Conseil

(57) **Abrégé**

Procédé de réalisation d'excroissance (12) de retenue des corps roulants d'une cage (1) de roulement massive ayant deux couronnes (2) et des ponts (4), définissant une enveloppe intérieure et une enveloppe extérieure limitées par les bords circulaires intérieurs (6) et extérieurs (7) et les chants intérieurs (8) et extérieurs (9) des ponts (4), des alvéoles (10), chacun limité par deux secteurs (2a) des deux couronnes (2) et les deux chants radiaux (11) en regard de deux ponts (4), et des excroissances (12) de retenue des corps roulants, associées aux ponts (4), dans lequel, l'on part d'une ébauche de cage (14), massive, en métal, apte au fluage, dépourvue d'excroissance de retenue des corps roulants mais comportant des protubérances (5a) localisées, ménagées sur les ponts (4), telles qu'une protubérance (5a) saille radialement d'un chant périphérique (8, 9) du pont (4) et s'étende localement en direction générale axiale en étant limitée par deux faces d'extrémité transversales (15), l'on applique sur les deux faces (15) de chaque protubérance (5a), deux forces aptes et destinées au fluage, chaque force ayant au moins une composante de direction axiale (F1), les deux composantes axiales (F1) étant dirigées l'une vers l'autre, l'application des deux forces ayant pour effet de faire fluer la matière constitutive de la protubérance (5a) pour qu'elle saille d'au moins une face formée par un chant radial (11) du pont (4) en étant dirigée vers l'alvéole (10) limité par ce pont (4), sur au moins une face d'extrémité transversale (15) de chaque protubérance (5a), l'on applique la force de fluage sur la partie radiale médiane (22) de ladite face d'extrémité transversale (15), et l'on réalise ainsi sur la cage (1) des excroissances (12) de retenue des corps roulants.

## Description

L'invention concerne le domaine des roulements. Elle porte plus précisément sur la réalisation des excroissances de retenue des corps roulants d'une cage de roulement. Elle a pour objets, un procédé de réalisation d'excroissances de retenue des corps roulants d'une cage de roulement, une ébauche de cage, apte et destinée à la réalisation d'une telle cage de roulement par la mise en oeuvre du procédé en question, un dispositif de réalisation des excroissances de retenue des corps roulants d'une cage de roulement, pour la mise en oeuvre du procédé en question, une cage de roulement, comprenant des excroissances de retenue des corps roulants, réalisées le procédé en question, et, enfin, un roulement comportant une telle cage de roulement.

Il est bien connu de l'état de la technique qu'un roulement comprend une bague intérieure, une bague extérieure et des corps roulants disposés entre les deux bagues dans des alvéoles d'une cage de roulement.

Dans une réalisation connue de l'état de la technique, illustrée par exemple par le document JP 2006 125457, la cage, en métal, est massive et comprend :
■ deux couronnes circulaires ayant le même axe et espacées axialement l'une de l'autre et des ponts reliant les deux couronnes et s'étendant dans une direction générale axiale, définissant une enveloppe intérieure de révolution et une enveloppe extérieure de révolution limitées par les bords circulaires intérieurs et extérieurs des deux couronnes et les chants périphériques intérieurs et extérieurs des ponts, et des alvéoles, chacun limité par deux secteurs des deux couronnes et les deux chants radiaux en regard de deux ponts adjacents, avec lesquels sont aptes à coopérer les corps roulants,
■ et des excroissances de retenue des corps roulants, associées aux ponts, chacune saillant d'une face formée par un chant radial d'un pont en étant dirigée vers l'alvéole limité par ce pont,

L'état de la technique enseigne que de telles excroissances peuvent être réalisées, par exemple, par découpe et enlèvement de matière, comme il est décrit dans les documents FR 2 543 466, WO/2012130791 et EP 1 803 952, ou encore par estampage et déformation de la matière, comme il est décrit dans les documents WO 2010/075915 et WO 2011/003394.

Selon le document EP 1296076, il est prévu de mettre en oeuvre la technique du fluage pour réaliser des saillies sur une cage de roulement. La matière est prise dans l'épaisseur même des ponts à leurs extrémités. Cette conception conduit par conséquent à modifier la géométrie des ponts, ce qui n'est pas souhaitable, le plus souvent. En outre, elle ne permet pas de réaliser des excroissances de dimensions et de positionnement très précis, de sorte que la caractéristique de chute et la caractéristique de jeu soient parfaitement maîtrisées. Elle ne permet pas non plus une répétabilité des opérations de réalisation des excroissances de façon rapide, économique, et sans risque de fissuration de la cage.

L'invention vise à répondre à ce problème.

Ci-après l'invention telle qu'elle est caractérisée.

Selon un premier aspect, l'invention a pour objet un procédé de réalisation d'excroissances de retenue des corps roulants d'une cage de roulement apte et destinée à un roulement comprenant, outre la cage, une bague intérieure, une bague extérieure et des corps roulants disposés entre les deux bagues dans des alvéoles de la cage,
la cage étant de type cage massive et comprenant :
■ deux couronnes circulaires ayant le même axe et espacées axialement l'une de l'autre et des ponts reliant les deux couronnes et s'étendant dans une direction générale axiale, définissant une enveloppe intérieure de révolution et une enveloppe extérieure de révolution limitées par les bords circulaires intérieurs et extérieurs des deux couronnes et les chants périphériques intérieurs et extérieurs des ponts, et des alvéoles, chacun limité par deux secteurs des deux couronnes et les deux chants radiaux en regard de deux ponts adjacents, avec lesquels sont aptes à coopérer les corps roulants,
■ et des excroissances de retenue des corps roulants, associées aux ponts, chacune saillant d'une face formée par un chant radial d'un pont en étant dirigée vers l'alvéole limité par ce pont.

Selon le procédé :
■ l'on part d'une ébauche de cage, massive, en métal, apte au fluage, dépourvue d'excroissances de retenue des corps roulants mais comportant des protubérances localisées, ménagées sur les ponts, telles qu'une protubérance saille radialement d'un chant périphérique du pont et s'étende localement en direction générale axiale en étant limitée par deux faces d'extrémité transversales,
■ l'on applique sur les deux faces d'extrémité transversales de chaque protubérance, deux forces aptes et destinées au fluage, chaque force ayant au moins une composante de direction axiale, les deux composantes axiales étant dirigées l'une vers l'autre, l'application des deux forces ayant pour effet de faire fluer la matière constitutive de la protubérance pour qu'elle saille d'au moins une face formée par un chant radial du pont en étant dirigée vers l'alvéole limité par ce pont,
■ l'on réalise ainsi sur la cage des excroissances de retenue des corps roulants,
■ et sur au moins une face d'extrémité transversale de chaque protubérance, l'on applique la force de fluage sur la partie radiale médiane de ladite face d'extrémité transversale, en particulier, l'on applique une force de fluage localisée autrement que sur les parties radiales latérales de ladite face d'extrémité transversale.

Selon les réalisations, l'on part d'une ébauche de cage telle que :
■ une protubérance s'étend dans la direction générale axiale en étant limitée par deux faces radiales dont au moins une, en particulier les deux, est sensiblement coplanaire du chant radial du pont correspondant, et/ou
■ une protubérance s'étend de façon localisée dans la zone médiane de la longueur axiale du pont, et/ou
■ les protubérances sont analogues, et/ou
■ les protubérances sont situées du côté des chants périphériques extérieurs des ponts, les excroissances de retenue des corps roulants étant des excroissances extérieures et/ou du côté des chants périphériques intérieurs des ponts les excroissances de retenue des corps roulants étant des excroissances intérieures.

Selon les réalisations, sur au moins une face d'extrémité transversale de chaque protubérance, l'on applique la force de fluage sur la partie périphérique extérieure de ladite face d'extrémité transversale, en particulier, dans lequel l'on applique une force de fluage localisée autrement que sur la partie périphérique intérieure de ladite face d'extrémité transversale.

Selon une réalisation, sur au moins une face d'extrémité transversale de chaque protubérance, l'on applique une force de fluage ayant, également, au moins une composante de direction périphérique transversale.

Selon une réalisation, sur les deux faces d'extrémité transversales de chaque protubérance, l'on applique deux forces de fluage ayant chacune, également, au moins une composante de direction périphérique transversale, les deux composantes périphériques transversales des deux forces de fluage étant dirigées dans le même sens, à savoir celui saillant d'une face formée par un chant radial du pont en étant dirigée vers l'alvéole limité par ce pont. Selon les réalisations, sur au moins une face d'extrémité transversale de chaque protubérance, l'on applique une force de fluage ayant, également, deux composantes de même direction périphérique transversale et de sens opposées, respectivement pour les deux chants radiaux du pont et les deux alvéoles limités par ce pont.

Selon les réalisations, sur au moins une face d'extrémité transversale de chaque protubérance, l'on applique une force de fluage ayant, également, une composante de direction périphérique radiale centripète, en particulier, dans lequel, sur les deux faces d'extrémité transversale de chaque protubérance, l'on applique deux forces de fluage ayant chacune, également, une composante de direction radiale centripète.

Selon les réalisations, sur les deux faces d'extrémité transversales de chaque protubérance, l'on applique deux forces de fluage ayant chacune, une composante axiale, et, également, au moins une composante de direction périphérique transversale, en particulier deux composantes de direction périphérique transversale et de sens opposés, et/ou une composante de direction périphérique radiale centripète, les composantes respectives des deux forces de fluage ayant deux à deux des valeurs analogues.

Selon une caractéristique possible, l'on applique pour les différentes protubérances des forces de fluage qui, pour chaque protubérance, sont de directions relatives analogues, de même sens et de valeurs analogues.

Selon un développement, l'on contrôle l'application des deux forces de fluage sur les deux faces d'extrémité transversales de chaque protubérance, de sorte à obtenir des excroissances de retenue de corps roulant de dimensions appropriées, en particulier analogues.

Selon des caractéristiques, l'on applique sur les protubérances les forces de fluage de sorte à faire fluer la matière constitutive de celles-ci, sans trancher et/ou enlever cette matière, et sans affecter la géométrie de l'ébauche, à l'exception des protubérances, notamment sans affecter la géométrie des ponts.

Selon les réalisations, l'on applique les forces de sorte à faire fluer la matière constitutive des protubérances, pour les différentes protubérances, soit de façon successive pour chaque protubérance ou pour chaque groupe d'un nombre limité de protubérances, avec itération pour chaque autre protubérance ou pour chaque autre groupe de protubérances, soit de façon simultanée.

Le procédé précédemment décrit peut être mis en oeuvre sur une ébauche de cage, apte et destinée, par la mise en oeuvre du procédé qui vient d'être décrit, à la réalisation d'une cage de roulement pour un roulement comprenant, outre la cage, une bague intérieure, une bague extérieure et des corps roulants disposés entre les deux bagues dans des alvéoles de la cage, où l'ébauche de cage, en métal, de type massif, comprend :
■ deux couronnes circulaires ayant le même axe et espacées axialement l'une de l'autre et des ponts reliant les deux couronnes et s'étendant dans une direction générale axiale, définissant une enveloppe intérieure de révolution et une enveloppe extérieure de révolution limitées par les bords circulaires intérieurs et extérieurs des deux couronnes et les chants périphériques intérieurs et extérieurs des ponts, et des alvéoles, chacun limité par deux secteurs des deux couronnes et les deux chants radiaux en regard de deux ponts adjacents,
■ et des protubérances localisées, ménagées sur les ponts, telles qu'une protubérance saille radialement d'un chant périphérique du pont et s'étende localement en direction générale axiale en étant limitée par deux faces d'extrémité transversales aptes et destinées à l'application de forces de fluage.

Selon les réalisations, une telle ébauche de cage est telle que :
■ une protubérance s'étend localement en direction générale axiale en étant limitée par deux faces radiales dont au moins une, en particulier les deux, est sensiblement coplanaire du chant radial du pont correspondant, et/ou
■ une protubérance s'étend de façon localisée dans la zone médiane de la longueur axiale du pont, et/ou
■ les protubérances sont analogues, et/ou
■ les protubérances sont situées du côté des chants périphériques extérieurs des ponts et/ou du côté des chants périphériques intérieurs des ponts.

Selon un deuxième aspect, l'invention a pour objet un dispositif de réalisation des excroissances de retenue des corps roulants d'une cage de roulement, pour la mise en oeuvre du procédé précédemment décrit, qui comprend :
■ des moyens de réception et de maintien en position fixe, aptes et destinés à recevoir et à maintenir en position fixe par rapport à un plan de référence médian du dispositif, une ébauche de cage telle qu'elle vient d'être décrite, ayant un axe disposé parallèlement à l'axe de l'ébauche, agencés de sorte qu'une protubérance où doivent être réalisées des excroissances soit accessible à des moyens d'application d'une force, dans une région de réalisation d'excroissance,
■ des moyens d'application d'une force, aptes et destinés à appliquer deux forces sur les deux faces d'extrémité transversales d'une protubérance, en deux parties disposées en vis-à-vis le long de l'axe du dispositif, comprenant :
   o deux organes d'application de force, situés dans la région de réalisation d'excroissance, dont au moins un poinçon conformé avec un bord saillant de déformation, s'étendant globalement au moins sensiblement en direction radiale, dirigé dans la direction de l'axe du dispositif et dans le sens orienté vers l'autre organe d'application de force, et comportant une partie active de poinçonnage en forme générale de dièdre ou proche de la forme d'un dièdre, dont l'angle dièdre forme le bord saillant de déformation
   o un espace entre les deux parties, apte et destiné à l'interposition de la au moins une protubérance,
   o des moyens de guidage à coulissement le long de l'axe du dispositif, aptes et destinés au coulissement relatif des deux parties le long de l'axe du dispositif,
   o des moyens d'entraînement le long de l'axe du dispositif, aptes et destinés à entraîner de façon relative les deux parties le long de l'axe du dispositif,
   et le dispositif comprenant des moyens de positionnement relatifs aptes et destinés à positionner de façon relative l'angle dièdre formant le bord saillant de déformation en regard d'une face d'extrémité transversale de la protubérance de l'ébauche, plus particulièrement en regard de la partie radiale médiane de ladite face d'extrémité transversale..

Selon les réalisations, les moyens de réception et de maintien sont agencés de sorte que toutes les protubérances de l'ébauche puissent être accessibles :
■ soit de façon successive pour chaque protubérance ou pour chaque groupe d'un nombre donné de protubérances, avec itération pour chaque autre protubérance ou pour chaque autre groupe de protubérances, les moyens de réception et de maintien étant agencés pour recevoir et maintenir l'ébauche dans plusieurs positions relatives, chacune pour la réalisation d'excroissances de retenue sur une protubérance ou un groupe d'un nombre donné de protubérances, le dispositif comprenant, le cas échéant, des moyens aptes et destinés à faire passer l'ébauche d'une position à la position suivante, tels que des moyens de pivotement de l'ébauche autour de son axe, les moyens d'application d'une force étant agencés de sorte à être aptes et destinés, à un moment donné, à appliquer deux forces sur les deux faces d'extrémité transversales d'une seule protubérance, ou d'un groupe de nombre donné de protubérances,
■ soit de façon simultanée, pour toutes les protubérances de l'ébauche, les moyens d'application d'une force étant agencés de sorte à être aptes et destinés, à un moment donné, à appliquer deux forces sur les deux faces d'extrémité transversales de toutes les protubérances de l'ébauche.

Selon une réalisation, les moyens d'application d'une force, comprennent, comme organes d'application de force, deux poinçons analogues tête-bêche.

Selon une caractéristique possible, l'angle dièdre formant le bord saillant de déformation, s'étend dans un plan radial en étant incliné de sorte à se rapprocher du plan de référence médian du dispositif en s'éloignant vers l'extérieur de la région de réalisation d'excroissance. Et selon une autre caractéristique possible, l'angle dièdre s'étend en direction périphérique transversale sur une distance plus petite que la largeur en direction périphérique transversale de la face d'extrémité transversale en regard de la protubérance de l'ébauche.

Selon un troisième aspect, l'invention a pour objet une cage de roulement, apte et destinée à un roulement comprenant, outre la cage, une bague intérieure, une bague extérieure et des corps roulants disposés entre les deux bagues dans des alvéoles de la cage, la cage étant de type cage massive, en métal, et comprenant :
■ deux couronnes circulaires ayant le même axe et espacées axialement l'une de l'autre et des ponts reliant les deux couronnes et s'étendant dans une direction générale axiale, définissant une enveloppe intérieure de révolution et une enveloppe extérieure de révolution limitées par les bords circulaires intérieurs et extérieurs des deux couronnes et les chants périphériques intérieurs et extérieurs des ponts, et des alvéoles, chacun limité par deux secteurs des deux couronnes et les deux chants radiaux en regard de deux ponts adjacents, avec lesquels sont aptes à coopérer les corps roulants,
■ des protubérances localisées, ménagées sur les ponts, telles qu'une protubérance saille radialement d'un chant périphérique du pont et s'étende localement en direction générale axiale en étant limitée par deux faces d'extrémité transversales,
■ et des excroissances de retenue des corps roulants, ménagées sur les protubérances, vers les extrémités opposées aux ponts, une excroissance saillant d'une face formée par un chant radial d'un pont en étant dirigée vers l'alvéole limité par ce pont. Ces excroissances ont été réalisées par fluage du métal, apte au fluage, constitutif de la matière de la cage, par le procédé précédemment décrit, au moins une face d'extrémité transversale de chaque protubérance, en particulier les deux faces d'extrémité de chaque protubérance, comporte une empreinte en creux disposée sur la face d'extrémité transversale de façon essentiellement localisée en direction périphérique transversale, dans la partie radiale médiane de ladite face d'extrémité transversale, et pas ou que très peu marquée en profondeur et localisée dans les deux parties radiales latérales de la face d'extrémité transversale.

Selon les réalisations :
■ les excroissances s'étendent dans la direction générale axiale, et/ou
■ les excroissances s'étendent de façon localisée dans la zone médiane de la longueur axiale des ponts, et/ou
■ les excroissances sont analogues, et/ou
■ les excroissances sont situées du côté des chants périphériques extérieurs des ponts et/ou les excroissances sont situées du côté des chants périphériques intérieurs des ponts.

Selon les réalisations, une telle empreinte en creux est telle que :
■ elle est disposée sur la face d'extrémité transversale de façon essentiellement localisée en direction radiale, dans la partie périphérique extérieure de ladite face d'extrémité transversale située vers la face périphérique extérieure, et pas ou que très peu marquée en profondeur et localisée dans la partie périphérique intérieure de la face d'extrémité transversale, attenante à la base,
■ elle est disposée sur la face d'extrémité transversale de façon à présenter une former proche ou s'apparentant à celle d'un angle dièdre dont les deux faces sont inclinées de façon sensiblement symétrique par rapport au plan radial médian Q du pont correspondant.

Selon un quatrième et dernier aspect, l'invention a pour objet un roulement comportant une bague intérieure, une bague extérieure, des corps roulants, et une cage de roulement telle qu'elle a été décrite.

On décrit maintenant brièvement les figures des dessins.
La figure 1 est une vue en élévation d'une réalisation possible d'ébauche de cage de roulement destinée à la mise en oeuvre du procédé de réalisation d'excroissances selon l'invention, illustrant tout spécialement les protubérances associées aux ponts.
La figure 2 est une vue en coupe axiale de l'ébauche de cage de roulement selon la ligne de coupe axiale II-II de la figure 1, au doit de deux ponts et de deux protubérances, illustrant également les protubérances associées aux ponts et leurs faces d'extrémité transversales.
La figure 3 est une vue partielle à plus grande échelle de la figure 1, illustrant un pont et la protubérance associée de l'ébauche de cage de roulement.
La figure 4 est une vue partielle, à plus grande échelle, en perspective, illustrant le procédé et le dispositif selon l'invention visant à réaliser les excroissances de la cage de roulement, à savoir deux poinçons disposés en regard des deux faces d'extrémité transversales d'une protubérance associée à un pont de l'ébauche de cage de roulement.
La figure 5 est une vue en perspective, illustrant un poinçon du dispositif selon l'invention.
Les figures 6A, 6B et 6C sont trois schémas partiels en coupe selon un plan axial médian d'un pont, de la protubérance associée et des deux poinçons du dispositif selon l'invention pour réaliser les excroissances de la cage de roulement, dans trois états typiques, à savoir au début du procédé (figure 6A), juste avant le moment où commence la réalisation des excroissances (figures 6B) et vers la fin du procédé, lorsque les excroissances ont été réalisées et avant dégagement des poinçons (figure 6C).
La figure 7 est une vue en élévation d'une réalisation possible de cage de roulement obtenue à partir de l'ébauche des figures 1 à 3 et mise en oeuvre du procédé de réalisation d'excroissances selon l'invention, illustrant tout spécialement les excroissances réalisées.
La figure 8 est une vue en coupe axiale de la cage de roulement selon la ligne de coupe axiale VII-VII de la figure 7, au doit de deux ponts et de deux protubérances.
La figure 9 est une vue partielle à plus grande échelle de la figure 7, illustrant un pont, la protubérance associée, et les excroissances de la cage de roulement selon l'invention.
La figure 10 est une vue partielle de dessus de la figure 9, illustrant un pont, la protubérance associée, les excroissances et les empreintes en creux des faces d'extrémité transversales de la protubérance de la cage de roulement selon l'invention.

De façon connue de l'homme du métier, un roulement comprend une bague intérieure, une bague extérieure et des corps roulants disposés entre les deux bagues dans des alvéoles d'une cage de roulement 1, plus communément appelée « cage ».

La cage 1 est de type cage massive et réalisée en métal.

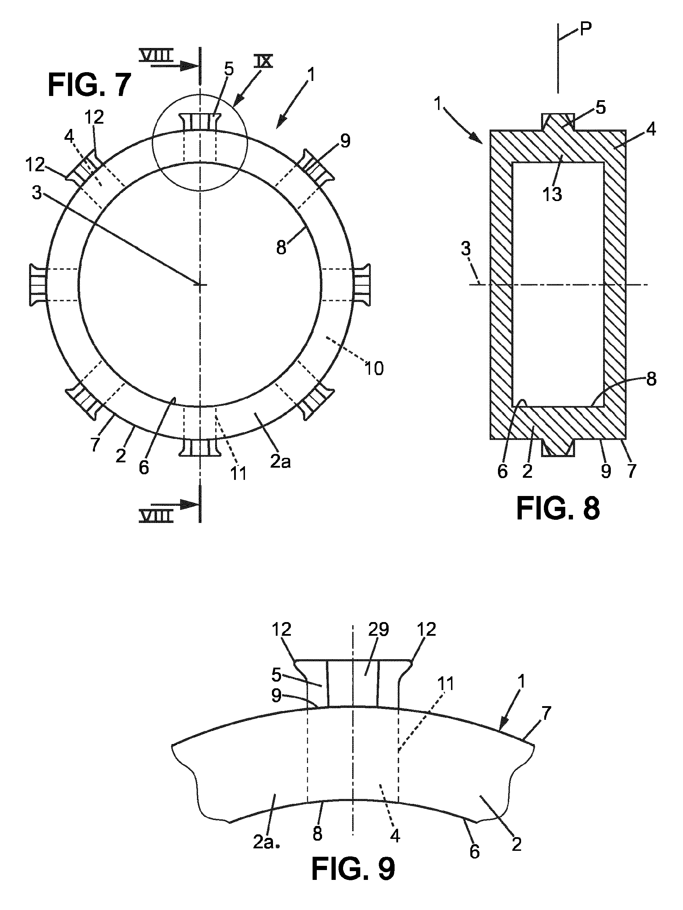

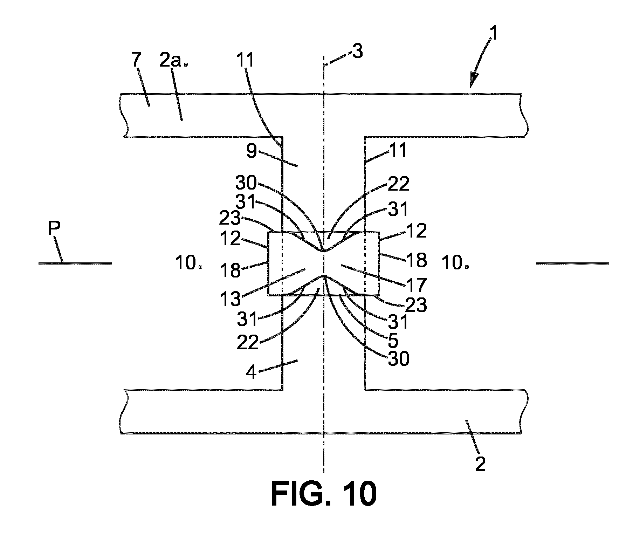

On se réfère plus spécialement aux figures 7 à 10 qui illustrent la cage 1. Cette cage 1 comprend, tout d'abord, deux couronnes circulaires 2, identiques, ayant le même axe 3. Ces couronnes 2 sont espacées axialement l'une de l'autre.

Des ponts 4, équidistants, identiques, relient les deux couronnes 2 en s'étendant dans une direction générale axiale. Dans la réalisation représentée ici, un pont est rectiligne axialement et il a une section droite transversale constante d'une extrémité à l'autre, de forme générale carrée ou rectangulaire. Une telle forme n'est cependant pas limitative, dès lors qu'elle permet la présence d'une protubérance 5 associée au pont 4. Le nombre de ponts 4 et la taille des ponts axialement et dans un plan transversal sont adaptés à chaque roulement, en fonction des besoins, comme cela est bien connu de l'homme du métier.

Dans la réalisation représentée, les ponts 4 ont une épaisseur radiale égale à celle des couronnes 2 et ils sont disposés dans l'épaisseur radiale des couronnes 2.

Le terme « axial » doit être compris comme relatif à ce qui s'étend dans ou pareillement à l'axe 3.
Le terme « transversal » doit être compris comme relatif à ce qui est perpendiculaire à l'axe 3.
Le terme « radial » doit être compris comme relatif à une droite transversale passant par l'axe 3.

Les dispositions qui précèdent permettent de définir, concernant la cage 2, une enveloppe intérieure de révolution et une enveloppe extérieure de révolution coaxiales d'axe 3. Ces enveloppes sont limitées par les bords circulaires intérieurs 6 et les bords circulaires extérieurs 7 des deux couronnes 2, ainsi que par les chants périphériques intérieurs 8 et les chants périphériques extérieurs 9 des ponts 4.

Le terme « périphérique » doit être compris comme qualifiant ce qui s'étend annulairement autour de l'axe 3.

Le terme « intérieur » doit être compris comme qualifiant ce qui est proche ou tourné vers l'axe 3, alors que le terme « extérieur » doit être compris, a contrario, comme qualifiant ce qui est éloigné ou tourné dans le sens opposé de l'axe 3.

Les dispositions qui précèdent permettent aussi de définir, concernant la cage 2, des alvéoles 10, équidistants, identiques, en nombre égal à celui des ponts 4.

Chaque alvéole 10 est limité, dans la direction axiale, par deux secteurs 2a en vis-à-vis des deux couronnes 2 et, dans la direction périphérique, par les deux chants radiaux 11, en regard, de deux ponts 4 adjacents.

Une telle disposition, connue en soi de l'homme du métier est telle que des corps roulants, tels que des rouleaux, sont aptes à venir se placer dans les alvéoles 10.

De façon également connue en soi de l'homme du métier, il est prévu que la cage 1 comporte des excroissances 12 de retenue des corps roulants, associées aux ponts 4.

Chaque excroissance 12 saille d'une face formée par un chant radial 11 d'un pont 4 en étant dirigée vers l'alvéole 10 qui est limité par ce pont 4 en étant attenant à ce chant 11.

Les excroissances 12 s'étendent sur une certaine longueur dans la direction générale axiale. Cette longueur est restreinte par rapport à la longueur du pont 4 en direction axiale. Dans la réalisation considérée, les excroissances 12 s'étendent dans la direction axiale de façon localisée dans les zones médianes 13 de la longueur axiale des ponts 4. Pour une cage 1 donnée, les excroissances 12 sont analogues entre elles.

Dans la réalisation représentée, sur les dessins, les excroissances 12 sont des excroissances extérieures car elles sont situées du côté des chants périphériques extérieurs 9 des ponts 4. Cette réalisation n'est pas limitative, les excroissances pouvant être situées du côté des chants périphériques intérieurs 8 des ponts 4. Ou bien même, il peut être prévu à la fois des excroissances 12 extérieures et des excroissances 12 intérieures.

Les excroissances 12, respectivement intérieures ou extérieures, sont écartées d'une courte distance, mais effectivement écartés, en direction radiale, des chants périphériques intérieurs 8 ou extérieurs 9 des ponts 4, et sont portées par les protubérances 5 vers leurs extrémités libres opposées aux ponts 4. Avec cette disposition, les excroissances 12 ne sont pas directement attenantes aux ponts 4, les protubérances 5 étant disposées entre eux. Ainsi, non seulement les excroissances 12 ne sont pas situées sur les chants radiaux 11 des ponts 4, mais elles sont écartées d'eux.

Par ailleurs, le plus souvent, et comme c'est le cas dans la réalisation représentée, il est prévu pour chaque pont 4, deux excroissances 12 (intérieures ou extérieures), chaque excroissance 12 étant située vers et associé à chacun des deux chants radiaux 11 du pont 4. Le plus souvent, ces deux excroissances 12 sont analogues, si ce n'est qu'elles sont opposées l'une à l'autre et associées aux deux chants radiaux 11 du pont 4. Ces réalisations ne sont toutefois pas exclusives d'autres.

Pour réaliser de telles excroissances 12, on met en oeuvre le procédé selon l'invention et le dispositif correspondant.

Pour ce faire, l'on part - ce qui signifie l'on a disposition ou bien l'on réalise - des ébauches de cage 14.

L'invention porte tant sur l'ébauche 14, que sur la cage 1 réalisée à partir d'elle par le procédé et le dispositif selon l'invention, et, enfin, sur le roulement comportant une bague intérieure, une bague extérieure, des corps roulants, et une telle cage de roulement 1.

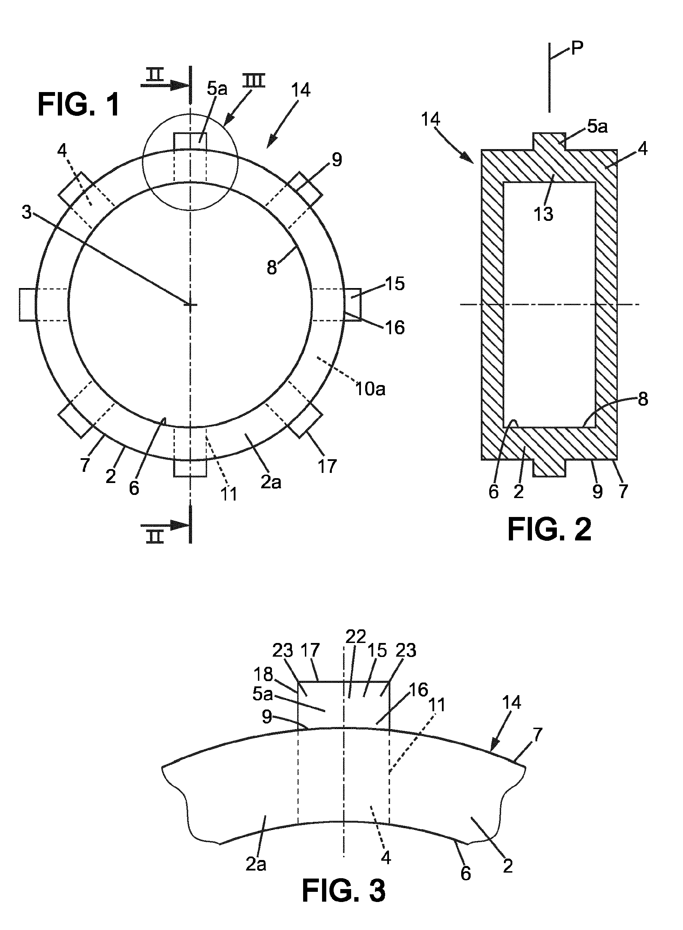

On se réfère plus spécialement aux figures 1 à 3 qui illustrent une telle ébauche la cage 14, plus communément appelée « ébauche ».

Comme la cage 1, l'ébauche 14 est également massive. Elle est en métal et celui-ci est choisi pour satisfaire toutes les exigences attendues communément d'une cage 1 et également être apte au fluage, pour les raisons liées au procédé mis en oeuvre.

L'ébauche 14 a une structure qui comporte nombre de caractéristiques analogues à celles de la cage 1. Pour cette raison, il n'y a pas lieu de répéter en détail à leur sujet ce qui a été dit en relation avec la cage 1. Les éléments de l'ébauche 14 identiques à ceux de la cage 1 sont identifiés par les mêmes références numériques.

Les termes « axial », « transversal », « radial », « périphérique », « intérieur », « extérieur », concernant l'ébauche 14 doivent être compris comme pour la cage 1.

L'ébauche 14 comprend les deux couronnes 2, d'axe 3, les ponts 4 avec leurs chants radiaux 11.

L'ébauche 14 comporte, par ailleurs, une protubérance 5a, qui diffère de celle, 5, de la cage 1, comme il est exposé, celle-ci découlant cependant de celle-là, par la mise en oeuvre du procédé. L'ébauche 14 comporte, enfin des alvéoles 10a, qui diffèrent des alvéoles 10 en ce qui concerne les excroissances 12.

L'ébauche 14 est dépourvue des excroissances 12 que comporte la cage 1.

L'ébauche 14 comporte, comme indiqué, des protubérances 5a, localisées, ménagées sur les ponts 4, analogues pour les différents ponts 4.

Une telle protubérance 5a, saille radialement d'un chant périphérique 8, 9, du pont 4, par exemple, dans la réalisation représentée sur les dessins, la protubérance 5a, extérieure, saille du chant périphérique extérieur 9. La suite de la description est faite en référence au cas d'une telle protubérance 5a extérieure. La description est aisément transposable au cas d'une protubérance 5a intérieure qui saille du chant périphérique intérieur 8. Et, de même au cas où l'ébauche 14 comporte des protubérances 5a intérieures et des protubérances 5a extérieures.

La protubérance 5a vient de fabrication avec le reste de l'ébauche 14, l'ensemble étant continu et monobloc.

La 5a s'étend localement en direction générale axiale et elle est limitée par deux faces d'extrémité transversales 15. Ces faces d'extrémité transversales 15 doivent être aptes et destinées à l'application de forces de fluage, comme il est décrit par la suite. Pour ce faire, les faces d'extrémité transversales 15 sont par exemple relativement planes ou très faiblement incurvées.

La protubérance 5a s'étend radialement à partir d'une base 16 qui est attenante au pont 4 dans sa zone médiane 13. Dans la réalisation décrite, elle est attenante de son chant périphérique extérieur 9, comme indiqué. A l'opposé de la base 16, vers l'extérieur dans la réalisation décrite, la protubérance 5a est limitée par une face périphérique extérieure 17.

La protubérance 5a comporte également deux faces radiales opposées, 18, coplanaires ou sensiblement coplanaires avec les chants radiaux respectifs 11 du pont 4.

Dans la réalisation représentée, la protubérance 5a a une forme générale parallélépipédique, ou cubique ou proche d'une forme parallélépipédique ou cubique. Une telle forme n'est cependant pas limitative.

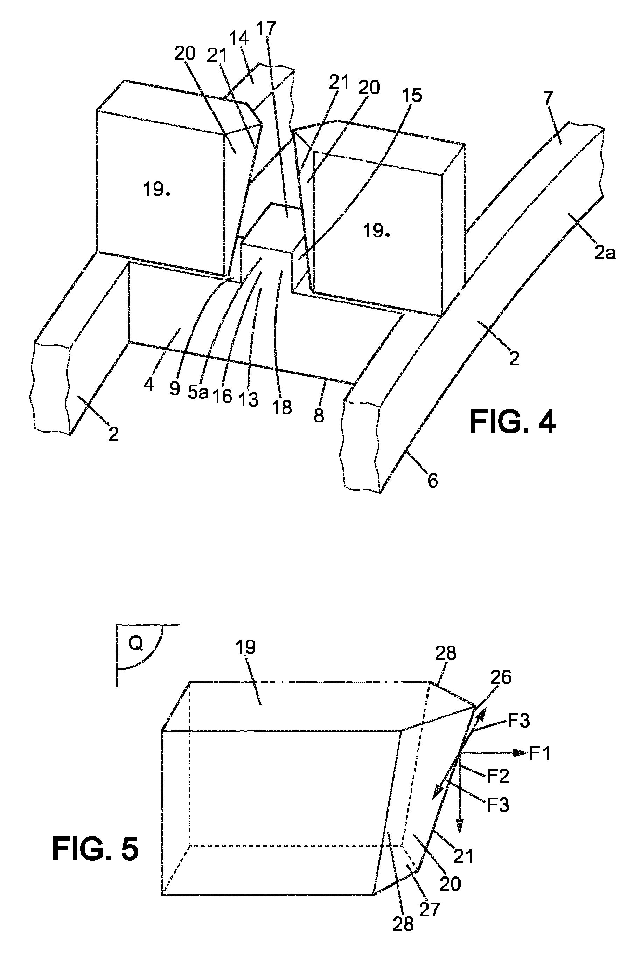

Dans le procédé selon l'invention, l'on applique sur les deux faces d'extrémité transversales 15 de chaque protubérance 5a, deux forces aptes et destinées au fluage. Chaque force a au moins une composante de direction axiale F1 (voir figure 5).

Les deux composantes axiales des deux forces sont dirigées l'une vers l'autre.

Avec l'application de ces deux forces, la matière de la protubérance 5a étant apte à fluer, l'on a pour effet de faire fluer la matière constitutive de la protubérance 5a pour qu'elle saille d'au moins une face formée par un chant radial 11 du pont en étant dirigée vers l'alvéole 10 limité par ce pont 4 et attenant à ce chant radial 11.

C'est ainsi que l'on réalise les excroissances 12 et, qu'à partir de l'ébauche 14, l'on obtient la cage 1.

Avec ce procédé, l'on fait fluer la matière constitutive des protubérances 5a, sans trancher ou enlever cette matière, et sans affecter la géométrie de l'ébauche 14, à l'exception des protubérances 5a, et notamment sans affecter la géométrie des ponts 4.

Pour mettre en oeuvre le procédé, on utilise un dispositif qui comprend tout d'abord des moyens de réception et de maintien en position fixe.

Ces moyens de réception et de maintien en position fixe sont aptes et destinés à recevoir et à maintenir en position fixe par rapport à un plan de référence médian du dispositif (plan médian P de l'ébauche 14), une ébauche 14.

Le dispositif présente un axe tel que l'axe de l'ébauche est disposé parallèlement à lui.

De tels moyens de réception et de maintien sont agencés de sorte qu'une protubérance 5a soit accessible à des moyens d'application d'une force, dans une région de réalisation d'excroissance.

De tels moyens de réception et de maintien peuvent être ou comprendre un support creux, ouvert, comportant une région de réalisation d'excroissance creuse où se trouve la protubérance 5a sur laquelle on souhaite former les excroissances 12.

Le dispositif comporte également des moyens d'application d'une force.

Ces moyens d'application d'une force sont aptes et destinés à appliquer deux forces sur les deux faces d'extrémité transversales 15 d'une protubérance 5a.

Ces moyens d'application d'une force sont en deux parties disposées en vis-à-vis le long de l'axe du dispositif.

Ces moyens d'application d'une force comprennent deux organes d'application de force, situés dans la région de réalisation d'excroissance, dont au moins un poinçon 19 conformé avec un bord saillant de déformation 20, s'étendant globalement au moins sensiblement en direction radiale, dirigé dans la direction de l'axe du dispositif et dans le sens orienté vers l'autre organe d'application de force.

Dans la réalisation illustrée par la figure 4, les moyens d'application d'une force, comprennent, comme organes d'application de force, deux poinçons 19 analogues, disposés tête-bêche. Cette réalisation n'est pas limitative. Par exemple il pourrait n'être prévu un poinçon que sur l'une des faces 15, une simple contrepartie étant prévue pour l'autre des faces 15.

Un tel poinçon 19 comporte une partie active de poinçonnage 20 en forme générale de dièdre ou proche de la forme d'un dièdre, dont l'angle dièdre forme le bord saillant de déformation 21.

Le dispositif comprend également un espace entre les deux organes 19 des moyens d'application d'une force, apte et destiné à l'interposition d'une protubérance 5a.

Le dispositif comprend également des moyens de guidage à coulissement le long de l'axe du dispositif. Ces moyens de guidage sont aptes et destinés au coulissement relatif des deux organes 19 des moyens d'application d'une force tels que les deux poinçons 19, le long de l'axe du dispositif.

Enfin, le dispositif comprend des moyens d'entraînement le long de l'axe du dispositif. Ces moyens d'entraînement sont aptes et destinés à entraîner de façon relative les deux parties 19 des moyens d'application d'une force tels que les deux poinçons 19 le long de l'axe du dispositif.

Selon une réalisation du procédé, et en premier lieu, sur au moins une face d'extrémité transversale 15 de chaque protubérance 5a - et en particulier sur les deux faces d'extrémité transversales 15 - , l'on applique la force de fluage en substance sur la partie radiale médiane 22 de cette face 15, située de façon médiane entre ses deux faces radiales 18 et écartée d'elles. Ainsi, l'on applique la force de fluage, en substance, sur la face d'extrémité transversale 15, de façon essentiellement localisée et non de façon significativement généralisée et totale en direction périphérique transversale et, en particulier, l'on n'applique pas du tout, ou l'on n'applique que très peu, la force de fluage sur les deux parties radiales latérales 23 de la face d'extrémité transversale 15, situées de part et d'autre de la partie radiale médiane 22 et attenantes aux deux faces radiales 18. Cette disposition constructive, comme celles décrites de façon détaillée par la suite, visent à faire en sorte que la protubérance d'ébauche 5a soit déformée dans des zones propres à la réalisation de l'excroissance 12 ou des deux excroissances 12 à l'endroit ou aux endroits souhaités et non ailleurs qu'à ces endroits. Comme décrit précédemment, de sorte que les excroissances 12 soient écartées d'une courte distance, mais effectivement écartés, en direction radiale des chants périphériques 8, 9 et des chants radiaux 11 des ponts 4.

Pour mettre en oeuvre cette caractéristique, le dispositif est tel que l'angle dièdre formant le bord saillant de déformation 21 s'étend en direction périphérique transversale sur une distance plus petite que la largeur en direction périphérique transversale de la face d'extrémité transversale 15 en regard de la protubérance 5a. D'autre part, le dispositif est agencé de sorte à comprendre des moyens de positionnement relatifs aptes et destinés à positionner de façon relative l'angle dièdre formant le bord saillant de déformation 21 en regard d'une face d'extrémité transversale 15 et plus particulièrement en regard de la partie radiale médiane 22 de cette face 15.

Selon une réalisation du procédé, et en deuxième lieu, sur au moins une face d'extrémité transversale 15 de chaque protubérance 5a - et en particulier sur les deux faces d'extrémité transversales 15 -, l'on applique la force de fluage sur la partie périphérique extérieure 24 de cette face 15, située vers la face périphérique extérieure 17 de la protubérance 5a et attenante à elle. Ainsi, l'on applique la force de fluage en substance sur la face d'extrémité transversale 15, de façon essentiellement localisée et non de façon significativement généralisée et totale en direction radiale et, en particulier, l'on n'applique pas du tout, ou l'on n'applique que très peu, la force de fluage sur la partie périphérique intérieure 25 de la face d'extrémité transversale 15, attenante à la base 16 de la protubérance 5a.

Avec cette caractéristique, sur au moins une face d'extrémité transversale 15 de chaque protubérance 5a - et en particulier sur les deux faces d'extrémité transversales 15 -, l'on applique une force de fluage ayant, également, une composante de direction périphérique radiale centripète F2 (figure 5).

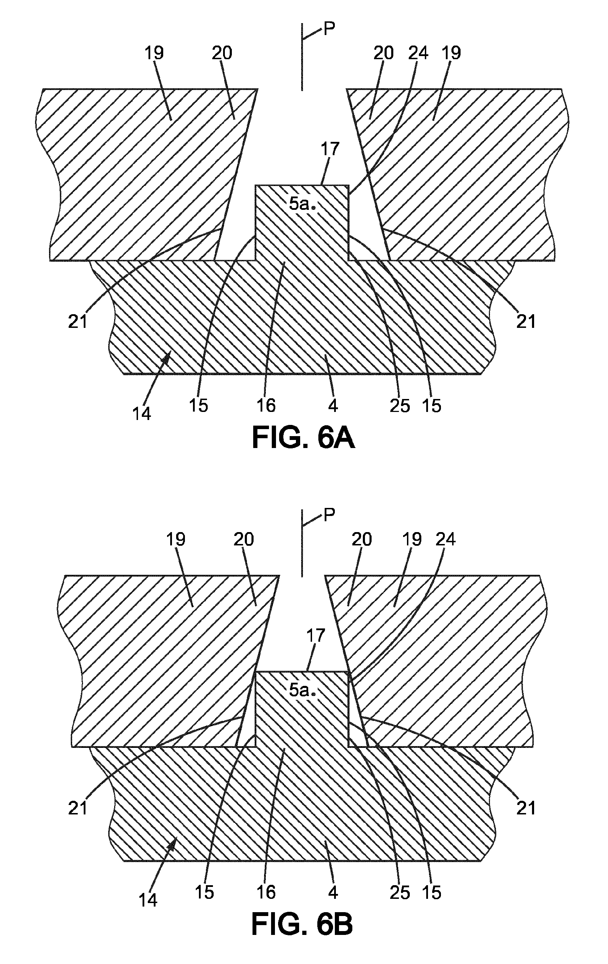

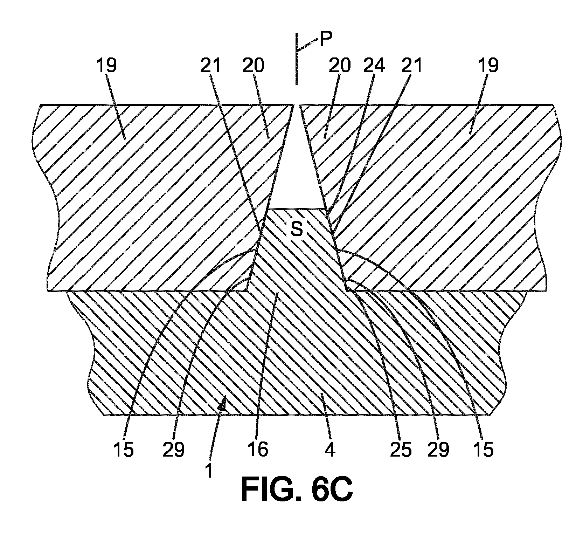

Pour mettre en oeuvre cette caractéristique, le dispositif est tel que l'angle dièdre formant le bord saillant de déformation 21 s'étend dans un plan radial en étant incliné de sorte à se rapprocher du plan de référence médian du dispositif (plan médian P de l'ébauche 14) en s'éloignant vers l'extérieur de la région de réalisation d'excroissance. Cette disposition constructive est bien visible sur les figures 4, 5 et 6A à 6C.

Selon une réalisation du procédé, et en troisième lieu, sur au moins une face d'extrémité transversale 15 de chaque protubérance 5a, l'on applique la force de fluage ayant, également, au moins une composante de direction périphérique transversale F3. Cette disposition constructive a pour but de déplacer la matière constitutive de la protubérance 5a de sorte qu'elle saille de la face formée par un chant radial 11 du pont 4 en étant dirigée vers l'alvéole 10 qui est limité par ce pont 4 en étant attenant à ce chant 11.

En particulier, sur les deux faces d'extrémité transversales 15 de chaque protubérance 5a, l'on applique deux forces de fluage ayant chacune, au moins une composante de direction périphérique transversale F3. Ces deux composantes périphériques transversales F3 des deux forces de fluage sont dirigées dans le même sens, à savoir celui saillant d'une face formée par un chant radial 11 du pont 4 en étant dirigée vers l'alvéole 10 limité par ce pont et attenant à ce chant 11. Avec cette disposition, l'on réalise une excroissance 12 en déplaçant la matière constitutive de la protubérance 5a dans un sens de la direction périphérique transversale, en agissant sur les deux faces d'extrémité transversales 15 prises « en tenaille » de façon identique et coordonnée par les moyens d'application d'une force, en particulier les poinçons 19, du dispositif.

En particulier, sur au moins une face d'extrémité transversale 15 de chaque protubérance 5a, l'on applique une force de fluage ayant, également, deux composantes F3, de même direction périphérique transversale et de sens opposées, respectivement pour les deux chants radiaux 11 du pont 4 et les deux alvéoles 10 limités par ce pont 4. Avec cette disposition, l'on réalise deux excroissances 12 en déplaçant la matière constitutive de la protubérance 5a dans les deux sens de la direction périphérique transversale.

Pour mettre en oeuvre les caractéristiques qui précèdent, le dispositif est tel que l'angle dièdre formant le bord saillant de déformation 21 est disposé de façon symétrique par rapport au plan radial médian Q de l'ébauche et du dispositif, les deux faces 28 du dièdre du poinçon 19 étant inclinées de façon symétrique par rapport au plan radial médian Q. Par exemple, les deux faces 28 du dièdre du poinçon 19 peuvent faire entre elles un angle aigu de l'ordre de 45° à 90°. Cette disposition constructive est bien visible sur les figures 4 et 5.

En particulier, l'on applique sur les deux faces d'extrémité transversales 15 de chaque protubérance 5a, deux forces de fluage ayant chacune, une composante axiale F1, et, également, au moins une composante de direction périphérique transversale F3, en particulier deux composantes de direction périphérique transversale et de sens opposés F3, et/ou une composante de direction périphérique radiale centripète F2, de telle manière que les composantes respectives F1, F2 et F3 des deux forces de fluage ont deux à deux des valeurs analogues. Ainsi, chaque excroissance 12 est symétrique ou sensiblement symétrique par rapport au plan médian P et deux excroissances 12 d'un même pont 4 sont symétriques par rapport au plan radial médian Q du pont 4.

Dans une réalisation, le dispositif est tel que l'angle dièdre formant le bord saillant de déformation 21 est arrondi de sorte à ne pas affecter, ou à ne pas affecter de façon significative, l'état de surface de la face d'extrémité transversale 15.

L'ébauche 14 ayant une pluralité de protubérances 5a, l'on applique, dans une réalisation, pour les différentes protubérances 5a des forces de fluage qui, pour chaque protubérance 5a, sont de directions relatives analogues, de même sens et de valeurs analogues. Ainsi, les différentes excroissances 12 réalisées sont analogues entre elles.

Et, afin d'obtenir des excroissances 12 de dimensions appropriées, en particulier analogues, l'on contrôle l'application des deux forces de fluage sur les deux faces d'extrémité transversales 15 de chaque protubérance 5a.

L'ébauche 14 ayant une pluralité de protubérances 5a, dans une réalisation possible, l'on applique les forces de fluage, de sorte à faire fluer la matière constitutive des protubérances 5a, pour les différentes protubérances 5a de façon successive pour chaque protubérance 5a ou pour chaque groupe d'un nombre limité de protubérances 5a, et opère une itération pour chaque autre protubérance 5a ou pour chaque autre groupe de protubérances 5a.

Dans une autre réalisation possible, l'on applique les forces de fluage, de sorte à faire fluer la matière constitutive des protubérances 5a, pour les différentes protubérances 5a de façon simultanée.

Par suite, dans une réalisation possible, le dispositif est tel que les moyens de réception et de maintien sont agencés de sorte que toutes les protubérances 5a de l'ébauche 14 puissent être accessibles de façon successive pour chaque protubérance 5a ou pour chaque groupe d'un nombre donné de protubérances 5a, avec itération pour chaque autre protubérance 5a ou pour chaque autre groupe de protubérances 5a.

Dans une autre réalisation possible, le dispositif est tel que les moyens de réception et de maintien sont agencés de sorte que toutes les protubérances 5a de l'ébauche 14 puissent être accessibles de façon simultanée.

Dans la première réalisation, le dispositif est tel que les moyens de réception et de maintien sont agencés pour recevoir et maintenir l'ébauche 14 dans plusieurs positions relatives, chacune pour la réalisation d'excroissances 12 sur une protubérance 5a ou un groupe d'un nombre donné de protubérances 5a et le dispositif comprend, le cas échéant, des moyens aptes et destinés à faire passer l'ébauche 14 d'une position à la position suivante. De tels moyens sont, par exemple, des moyens de pivotement de l'ébauche 14 autour de son axe 3 et les moyens d'application d'une force 19 sont agencés de sorte à être aptes et destinés, à un moment donné, à appliquer deux forces sur les deux faces d'extrémité transversales 15 d'une seule protubérance 5a, ou d'un groupe de nombre donné de protubérances 5a.

Dans la seconde réalisation, le dispositif est tel que les moyens d'application d'une force sont agencés de sorte à être aptes et destinés, à un moment donné, à appliquer deux forces sur les deux faces d'extrémité transversales 15 de toutes les protubérances 5a de l'ébauche 14.

Ainsi, dans la première réalisation, les excroissances 12 d'une ébauche 14 sont réalisées en plusieurs passes successives, alors que dans la seconde réalisation, elles ont réalisées en une seule et même passe.

Par ailleurs, le dispositif peut être agencé pour recevoir une seule ébauche 14 à la fois, ou, au contraire pour recevoir plusieurs ébauches 14, traitées en même temps ou de façon successive.

Le procédé décrit et le dispositif pour la mise en oeuvre du procédé permettent la réalisation d'une cage de roulement 1 qui comprend, outre les deux couronnes circulaires 2, identiques, d'axe 3, espacées axialement l'une de l'autre et les ponts 4, équidistants, identiques, reliant les deux couronnes 2 en s'étendant dans une direction générale axiale, des protubérances 5 localisées, ménagées sur les ponts 4.

Ces protubérances 5 sont dérivées des protubérances 5a de l'ébauche 14 après mis en oeuvre du procédé précédemment décrit. Ainsi, une protubérance 5 saille radialement d'un chant périphérique 8, 9 du pont 4 auquel elle est associée et elle s'étend localement en direction générale axiale en étant limitée par deux faces d'extrémité transversales 15.

Les caractéristiques des protubérances 5 de la cage 1 sont analogues à celles des protubérances 5a de l'ébauche 14, si ce n'est qu'elles ont subi une déformation, ayant pour effet la réalisation, sur chacune d'elles, d'excroissances 12 et d'empreintes en creux 29, par suite du fluage de la matière constitutives, lui-même résultant de l'application des forces de fluage, comme il a été décrit.

Les excroissances 12 de retenue des corps roulants, analogues entre elles, sont ménagées sur les protubérances 5. Elles s'étendent sur une certaine longueur axiale, restreinte par rapport à la longueur axiale des ponts 4, en l'espèce dans les zones médianes 13 des ponts 4. Ces excroissances 12 sont extérieures et/ou intérieures et, pour chaque pont 4, il est prévu deux excroissances 12 vers chacun des deux chants radiaux 11 du pont 4. Les excroissances 12 sont écartées d'une courte distance, mais d'une distance effective, en direction radiale, des chants périphériques 8, 9, des ponts 4, et sont portées par les protubérances 5 vers leurs faces périphériques extérieures 17. Ainsi, les excroissances 12 ne sont pas directement attenantes aux ponts 4, mais situées à l'écart des chants radiaux 11 des ponts 4. Cette disposition constructive est obtenue par l'effet de la manière dont les forces de fluage sont appliquées aux protubérances 5a de l'ébauche 14, comme il a été décrit. Ainsi, selon une caractéristique de la cage 1, les excroissances 12 ont été réalisées par fluage du métal, apte au fluage, constitutif de la matière de la cage 1 et des protubérances 5, par le procédé précédemment décrit et au moyen du dispositif pour sa mise en oeuvre.

Au moins une face d'extrémité transversale 15 de chaque protubérance 5, et en particulier les deux faces d'extrémité transversales 15 de chaque protubérance 5, comporte une empreinte en creux 29 ayant une zone de fond 30 correspondant à l'application du bord saillant de déformation 21 du poinçon 19. Lorsque le bord saillant 21 est arrondi, la zone de fond 30 l'est également.

Une telle empreinte en creux 29 est disposée sur la face d'extrémité transversale 15 d'une protubérance 5, de façon essentiellement localisée en direction périphérique transversale, en l'espèce dans la partie radiale médiane 22 de cette face d'extrémité transversale 15, et pas ou que très peu marquée en profondeur et localisée dans les deux parties radiales latérales 23 de la face d'extrémité transversale 15.

Une telle empreinte en creux 29 est disposée sur la face d'extrémité transversale 15 d'une protubérance 5, de façon essentiellement localisée en direction radiale, en l'espèce dans la partie périphérique extérieure 24 de cette face d'extrémité transversale 15, située vers la face périphérique extérieure 17, et pas ou que très peu marquée en profondeur et localisée dans la partie périphérique intérieure 25 de la face d'extrémité transversale 15, attenante à la base 16.

Une telle empreinte en creux 29 est disposée sur la face d'extrémité transversale 15 d'une protubérance 5, de façon à présenter une former proche ou s'apparentant à celle d'un angle dièdre dont les deux faces 31 sont inclinées de façon sensiblement symétrique par rapport au plan radial médian Q du pont correspondant. Par exemple, les deux faces 31 peuvent faire entre elles un angle aigu de l'ordre de 45° à 90°. Ainsi, l'empreinte en creux 29 présente en section transversale par rapport à sa zone de fond 30, une forme proche ou s'apparentant à celle d'un V. Ce V est plus profond et plus marqué dans la partie périphérique extérieure 24 que dans la partie périphérique intérieure 25 de la face d'extrémité transversale 15.

## Revendications

1. Procédé de réalisation d'excroissance (12) de retenue des corps roulants d'une cage de roulement (1) apte et destinée à un roulement comprenant, outre la cage (1), une bague intérieure, une bague extérieure et des corps roulants disposés entre les deux bagues dans des alvéoles (10) de la cage (1),
la cage (1) étant de type cage massive et comprenant :
■ deux couronnes circulaires (2) ayant le même axe (3) et espacées axialement l'une de l'autre et des ponts (4) reliant les deux couronnes (2) et s'étendant dans une direction générale axiale, définissant une enveloppe intérieure de révolution et une enveloppe extérieure de révolution limitées par les bords circulaires intérieurs (6) et extérieurs (7) des deux couronnes (2) et les chants périphériques intérieurs (8) et extérieurs (9) des ponts (4), et des alvéoles (10), chacun limité par deux secteurs (2a) des deux couronnes (2) et les deux chants radiaux (11) en regard de deux ponts (4) adjacents, avec lesquels sont aptes à coopérer les corps roulants,
■ et des excroissances (12) de retenue des corps roulants, associées aux ponts (4), chacune saillant d'une face formée par un chant radial (11) d'un pont (4) en étant dirigée vers l'alvéole (10) limité par ce pont (4),
**caractérisé en ce que** :
■ l'on part d'une ébauche de cage (14), massive, en métal, apte au fluage, dépourvue d'excroissance de retenue des corps roulants mais comportant des protubérances (5a) localisées, ménagées sur les ponts (4), telles qu'une protubérance (5a) saille radialement d'un chant périphérique (8, 9) du pont (4) et s'étende localement en direction générale axiale en étant limitée par deux faces d'extrémité transversales (15),
■ l'on applique sur les deux faces d'extrémité transversales (15) de chaque protubérance (5a), deux forces aptes et destinées au fluage, chaque force ayant au moins une composante de direction axiale (F1), les deux composantes axiales (F1) étant dirigées l'une vers l'autre, l'application des deux forces ayant pour effet de faire fluer la matière constitutive de la protubérance (5a) pour qu'elle saille d'au moins une face formée par un chant radial (11) du pont (4) en étant dirigée vers l'alvéole (10) limité par ce pont (4),
■ sur au moins une face d'extrémité transversale (15) de chaque protubérance (5a), l'on applique la force de fluage sur la partie radiale médiane (22) de ladite face d'extrémité transversale (15), en particulier, l'on applique une force de fluage localisée autrement que sur les parties radiales latérales (23) de ladite face d'extrémité transversale (15),
■ et l'on réalise ainsi sur la cage (1) des excroissances (12) de retenue des corps roulants.

2. Procédé selon la revendication 1, dans lequel l'on part d'une ébauche de cage (14) telle que :
■ une protubérance (5a) s'étend dans la direction générale axiale en étant limitée par deux faces radiales (18) dont au moins une, en particulier les deux, est sensiblement coplanaire du chant radial (11) du pont (4) correspondant, et/ou
■ une protubérance (5a) s'étend de façon localisée dans la zone médiane (13) de la longueur axiale du pont (4), et/ou
■ les protubérances (5a) sont analogues, et/ou
■ les protubérances (5a) sont situées du côté des chants périphériques extérieurs (9) des ponts (4), les excroissances (12) de retenue des corps roulants étant des excroissance (12) extérieures et/ou du côté des chants périphériques intérieurs (8) des ponts (4) les excroissances (12) de retenue des corps roulants étant des excroissances (12) intérieures.

3. Procédé selon l'une quelconque des revendications 1 et 2, dans lequel, sur au moins une face d'extrémité transversale (15) de chaque protubérance (5a), l'on applique la force de fluage sur la partie périphérique extérieure (24) de ladite face d'extrémité transversale (15), en particulier, dans lequel l'on applique une force de fluage localisée autrement que sur la partie périphérique intérieure (25) de ladite face d'extrémité transversale (15).

4. Procédé selon l'une quelconque des revendications 1 à 3, dans lequel, sur les deux faces d'extrémité transversales (15) de chaque protubérance (5a), l'on applique deux forces de fluage ayant chacune, également, au moins une composante de direction périphérique transversale (F3), les deux composantes périphériques transversales (F3) des deux forces de fluage étant dirigées dans le même sens, à savoir celui saillant d'une face formée par un chant radial (11) du pont (4) en étant dirigée vers l'alvéole (10) limité par ce pont (4).

5. Procédé selon l'une quelconque des revendications 1 à 4, dans lequel, sur au moins une face d'extrémité transversale (15) de chaque protubérance (5a), l'on applique une force de fluage ayant, également, deux composantes de même direction périphérique transversale (F3) et de sens opposées, respectivement pour les deux chants radiaux (11) du pont (4) et les deux alvéoles (10) limités par ce pont (4).

6. Procédé selon l'une quelconque des revendications 1 à 5, dans lequel, sur au moins une face d'extrémité transversale (15) de chaque protubérance (5a), l'on applique une force de fluage ayant, également, une composante de direction périphérique radiale centripète (F2), en particulier, dans lequel, sur les deux faces d'extrémité transversales (15) de chaque protubérance (5a), l'on applique deux forces de fluage ayant chacune, également, une composante de direction radiale centripète (F2).

7. Procédé selon l'une quelconque des revendications 1 à 6, dans lequel l'on applique les forces de sorte à faire fluer la matière constitutive des protubérances (5a), pour les différentes protubérances (5a), soit de façon successive pour chaque protubérance (5a) ou pour chaque groupe d'un nombre limité de protubérances (5a), avec itération pour chaque autre protubérance (5a) ou pour chaque autre groupe de protubérances (5a), soit de façon simultanée.

8. Dispositif de réalisation des excroissances (12) de retenue des corps roulants d'une cage de roulement (1), pour la mise en oeuvre du procédé selon l'une des revendications 1 à 7, qui comprend :
■ des moyens de réception et de maintien en position fixe, aptes et destinés à recevoir et à maintenir, en position fixe par rapport à un plan de référence médian du dispositif, une ébauche de cage (14) massive, en métal, apte au fluage, dépourvue d'excroissance de retenue des corps roulants mais comportant des protubérances (5a) localisées, ménagées sur des ponts (4) reliant deux couronnes (2) et s'étendant dans une direction générale axiale, telles qu'une protubérance (5a) saille radialement d'un chant périphérique (8, 9) du pont (4) et s'étende localement en direction générale axiale en étant limitée par deux faces d'extrémité transversales (15), les moyens de réception et de maintien en position fixe ayant un axe disposé parallèlement à l'axe de l'ébauche (14), agencés de sorte qu'une protubérance (5a) de la cage (14) où doivent être réalisées des excroissances (12) soit accessible à des moyens d'application d'une force, dans une région de réalisation d'excroissance (12),
■ des moyens d'application d'une force, aptes et destinés à appliquer deux forces sur les deux faces d'extrémité transversales (15) d'une protubérance (5a), en deux parties disposées en vis-à-vis le long de l'axe du dispositif, comprenant :
o deux organes d'application de force, situés dans la région de réalisation d'excroissance (12), dont au moins un poinçon (19) conformé avec un bord saillant de déformation (21), s'étendant globalement au moins sensiblement en direction radiale, dirigé dans la direction de l'axe du dispositif et dans le sens orienté vers l'autre organe d'application de force, et comportant une partie active de poinçonnage (20) en forme générale de dièdre ou proche de la forme d'un dièdre, dont l'angle dièdre forme le bord saillant de déformation (21),
o un espace entre les deux organes (19), apte et destiné à l'interposition de la au moins une protubérance (5a),
o des moyens de guidage à coulissement le long de l'axe du dispositif, aptes et destinés au coulissement relatif des deux organes (19) le long de l'axe du dispositif,
o et des moyens d'entraînement le long de l'axe du dispositif, aptes et destinés à entraîner de façon relative les deux organes (19) le long de l'axe du dispositif,
et le dispositif comprenant des moyens de positionnement relatifs aptes et destinés à positionner de façon relative l'angle dièdre formant le bord saillant de déformation (21) en regard d'une face d'extrémité transversale (15) de la protubérance (5a) de l'ébauche (14), en regard de la partie radiale médiane (22) de ladite face d'extrémité transversale (15).

9. Dispositif selon la revendication 8, dans lequel les moyens de réception et de maintien sont agencés de sorte que toutes les protubérances (5a) de l'ébauche (14) puissent être accessibles :
■ soit de façon successive pour chaque protubérance (5a) ou pour chaque groupe d'un nombre donné de protubérances (5a), avec itération pour chaque autre protubérance (5a) ou pour chaque autre groupe de protubérances (5a), les moyens de réception et de maintien étant agencés pour recevoir et maintenir l'ébauche (14) dans plusieurs positions relatives, chacune pour la réalisation d'excroissance (12) de retenue sur une protubérance (5a) ou un groupe d'un nombre donné de protubérances (5a), le dispositif comprenant, le cas échéant, des moyens aptes et destinés à faire passer l'ébauche (14) d'une position à la position suivante, tels que des moyens de pivotement de l'ébauche (14) autour de son axe, les moyens d'application d'une force étant agencés de sorte à être aptes et destinés, à un moment donné, à appliquer deux forces sur les deux faces d'extrémité transversales (15) d'une seule protubérance (5a), ou d'un groupe de nombre donné de protubérances (5a),
■ soit de façon simultanée, pour toutes les protubérances (5a) de l'ébauche (14), les moyens d'application d'une force étant agencés de sorte à être aptes et destinés, à un moment donné, à appliquer deux forces sur les deux faces d'extrémité transversales (15) de toutes les protubérances (5a) de l'ébauche (14).

10. Dispositif selon l'une quelconque des revendications 8 et 9, dont les moyens d'application d'une force, comprennent, comme organes d'application de force, deux poinçons (19) analogues tête-bêche.

11. Dispositif selon l'une quelconque des revendications 8 à 10, dans lequel l'angle dièdre formant le bord saillant de déformation (21), s'étend dans un plan radial en étant incliné de sorte à se rapprocher du plan de référence médian (P) du dispositif en s'éloignant vers l'extérieur de la région de réalisation d'excroissance.

12. Dispositif selon l'une quelconque des revendications 8 et 11, dans lequel l'angle dièdre formant le bord saillant de déformation (21) s'étend en direction périphérique transversale sur une distance plus petite que la largeur en direction périphérique transversale de la face d'extrémité transversale (15) en regard de la protubérance (5a) de l'ébauche (14).

13. Cage de roulement (1), apte et destinée à un roulement comprenant, outre la cage (1), une bague intérieure, une bague extérieure et des corps roulants disposés entre les deux bagues dans des alvéoles (10) de la cage (1), la cage (1) étant de type cage massive, en métal, et comprenant :
■ deux couronnes circulaires (2) ayant le même axe (3) et espacées axialement l'une de l'autre et des ponts (4) reliant les deux couronnes (2) et s'étendant dans une direction générale axiale, définissant une enveloppe intérieure de révolution et une enveloppe extérieure de révolution limitées par les bords circulaires intérieurs (6) et extérieurs (7) des deux couronnes (2) et les chants périphériques intérieurs (8) et extérieurs (9) des ponts (4), et des alvéoles (10), chacun limité par deux secteurs (2a) des deux couronnes (2) et les deux chants radiaux (11) en regard de deux ponts (4) adjacents, avec lesquels sont aptes à coopérer les corps roulants,
■ des protubérances (5) localisées, ménagées sur les ponts (4), telles qu'une protubérance (5) saille radialement d'un chant périphérique (8, 9) du pont (4) et s'étende localement en direction générale axiale en étant limitée par deux faces d'extrémité transversales (15),
■ et des excroissances (12) de retenue des corps roulants, ménagées sur les protubérances (5), vers les extrémités opposées aux ponts (4), une excroissance (12) saillant d'une face formée par un chant radial (11) d'un pont (4) en étant dirigée vers l'alvéole (10) limité par ce pont (4),
dans laquelle les excroissances (12) ont été réalisées par fluage du métal, apte au fluage, constitutif de la matière de la cage (1), par le procédé selon l'une quelconque des revendications 1 à 7, au moins une face d'extrémité transversale (15) de chaque protubérance (5), en particulier les deux faces d'extrémité de chaque protubérance (5), comportant une empreinte (29) en creux disposée sur la face d'extrémité transversale (15) de façon essentiellement localisée en direction périphérique transversale, dans la partie radiale médiane (22) de ladite face d'extrémité transversale (15), et pas ou que très peu marquée en profondeur et localisée dans les deux parties radiales latérales (23) de la face d'extrémité transversale (15).

14. Cage de roulement (1), selon la revendication 13, dans laquelle une empreinte en creux (29) est telle que :
■ elle est disposée sur la face d'extrémité transversale (15) de façon essentiellement localisée en direction radiale, dans la partie périphérique extérieure (24) de ladite face d'extrémité transversale (15) située vers la face périphérique extérieure (17), et pas ou que très peu marquée en profondeur et localisée dans la partie périphérique intérieure (25) de la face d'extrémité transversale (15), attenante à la base (16),
■ elle est disposée sur la face d'extrémité transversale (15) de façon à présenter une former proche ou s'apparentant à celle d'un angle dièdre dont les deux faces (31) sont inclinées de façon sensiblement symétrique par rapport au plan radial médian (Q) du pont (4) correspondant.

15. Roulement comportant une bague intérieure, une bague extérieure, des corps roulants, et une cage de roulement (1) selon l'une quelconque des revendications 13 et 14.
